# EUROPÄISCHE PATENTSCHRIFT

(11) **EP 2 092 976 B1**
(45) Veröffentlichungstag und Bekanntmachung des Hinweises auf die Patenterteilung: **10.07.2013**
(21) Anmeldenummer: 09151660.9
(22) Anmeldetag: 29.01.2009
(51) Int. Cl.: B01J 6/00, B01J 8/40, B01J 19/08, C01B 13/14, C01B 13/24, C01F 7/02, C01G 9/02

(54) **Verfahren zur Herstellung feinteiliger Partikel**
Method for producing fine particles
Procédé de fabrication de particules fines

(30) Priorität: 30.01.2008 DE 102008006607
(43) Veröffentlichungstag der Anmeldung: 26.08.2009
(73) Patentinhaber: IBU-tec advanced materials AG, 99425 Weimar (DE)
(72) Erfinder: Ambrosius, Stefan, 99439 Berlstedt (DE); Polt, Christian, 99427 Weimar (DE); Leidolph, Lars, Dr., 99084 Erfurt (DE); Weitz, Ulrich, 99425 Weimar (DE)
(74) Vertreter: Finger, Catrin

(56) Entgegenhaltungen:
- DE-A1- 10 109 892
- DE-A1-102006 027 133
- DE-A1-102006 032 452
- DE-A1-102006 046 805

## Beschreibung

Die Erfindung betrifft ein Verfahren zur Herstellung feinteiliger Partikel. Solche Partikel weisen typischerweise eine mittlere Korngröße von 5 nm bis 100 µm auf.

Im Weiteren wird unter feinteiligen Partikeln eine Partikelgröße von < 100 µm verstanden. Definitionsgemäß wird damit der spezielle Bereich der so genannten Nanopartikel (Partikelgröße < 100 nm) mit eingeschlossen. Weiterhin werden Pulver mit einem mittlerem Partikeldurchmesser < 100 µm als feinteilige Pulver bezeichnet.

Zur Herstellung von feinteiligen Pulvern haben sich verschiedene Herstellungsverfahren etabliert.

Feinteilige Oxid- oder Mischoxidpulver werden im Wesentlichen mit folgenden Verfahren hergestellt: Mischen, Trocknen und nachfolgende thermische Zersetzung von Oxide, Carbonaten Nitraten, Acetaten, Chloriden o.a. Salzen (Festkörper- Reaktion); Kofällung sowie nachfolgende Trocknung und Kalzinierung; Sol- Gel-Technik; Hydrolyse von Alkoxiden; Plasma- Sprühverfahren; Sprühpyrolyse wässriger und organischer Salzlösungen.

Je nach Einsatzgebiet der feinteiligen Pulver ist meist eine genau definierte und enge Partikelgrößenverteilung erforderlich. Abhängig von der chemischen Natur der gewünschten feinteiligen Pulver eignet sich das eine oder andere Verfahren besser, um ein gutes Ergebnis zu erreichen. Meist liefern Verfahren in Lösung oder Verfahren der Selbstorganisierung die besten Ergebnisse, sind aber großtechnisch nur schwer oder gar nicht durchführbar.

Die so genannte Sprühpyrolyse gehört zu den Aerosolverfahren, die durch Versprühen von Lösungen, Suspensionen oder Dispersionen in einen durch unterschiedliche Art und Weise erhitzten Reaktionsraum (Reaktor) sowie die Bildung und Abscheidung von Feststoffpartikeln gekennzeichnet sind. Im Gegensatz zur Sprühtrocknung mit Heißgastemperaturen < 300°C finden bei der Sprühpyrolyse als Hochtemperaturprozess außer der Verdampfung des Lösungsmittels zusätzlich die thermische Zersetzung der verwendeten Edukte (z. B. Salze) sowie die Neubildung von Stoffen (z. B. Oxide, Mischoxide) statt.

Durch Unterschiede in der Wärmeerzeugung und -übertragung, der Zuführung von Energie und Aufgabeprodukt, der Art der Aerosolerzeugung und der Art der Partikelabscheidung gibt es eine Vielzahl von Verfahrensvarianten, die auch durch verschiedene Reaktor- Bauarten gekennzeichnet sind. Zu nennen sind hier beispielsweise die Ausführungsformen Heißwandreaktor, Flammenpyrolyse-Reaktor und Heißgas-Reaktor bzw. Pulsationsreaktor. Die genannten Reaktoren können aufgrund der sehr kurzen Verweilzeiten unter der Rubrik Kurzzeitreaktoren zusammengefasst werden.

Zur Herstellung von feinteiligen Oxid- oder MischoxidPulver hat sich das Pulsationsreaktor-Verfahren aufgrund verfahrenstechnischer Besonderheiten als besonders geeignet erwiesen. Der Pulsationsreaktor unterscheidet sich von anderen Verfahren grundsätzlich dadurch, dass ein pulsierender Heißgasstrom erzeugt wird. In diesen Heißgasstrom wird die Rohstoffmischung eingebracht, wobei diese durch die thermoschockartige Zersetzungsreaktion in wenigen Millisekunden umgewandelt wird.

Die Nutzung eines pulsierenden Heißgasstroms zur Herstellung feinteiliger Partikel in einem Pulsationsreaktor bietet spezifische Vorteile gegenüber anderen Verfahren. So resultiert ein deutlich erhöhter Wärmeübergang aufgrund der hohen Strömungsturbulenzen bedingt durch die pulsierende Verbrennung. Dieser erhöhte Wärmeübergang ist entscheidend für den Ablauf der Phasenreaktion im Material, für einen vollständigen Umsatz innerhalb kurzer Verweilzeiten und führt zu einem deutlich erhöhten spezifischen Materialdurchsatz im Vergleich zu den oben genannten Verfahren.

Die mittels eines Pulsationsreaktor, also mittels eines pulsierenden Heißgasstroms, hergestellten feinteiligen Pulver zeichnen sich gegenüber anderen Verfahren durch sphärische Partikelform und hohe Reaktivität, aufgrund der extrem kurzen Verweilzeit und dem damit verbundenen hohem Grad an Gitterfehlordnungen, aus.

Der pulsierende Heißgasstrom wird in der Brennkammer des Pulsationsreaktors über ein selbst regelndes System erzeugt. Dabei ist der Brennraum eingangsseitig mit einem oder mehreren Aeroventilen zum Eintritt von Brenngasgemischen ausgestattet. Der Brennstoff sowie die notwendige Verbrennungsluft gelangen über die Ventile in den Brennraum und werden dort gezündet, verbrennen sehr schnell und erzeugen eine Druckwelle in Richtung des Resonanzrohres, da der Brenngaseintritt durch die aerodynamische Ventile bei Überdruck weitgehend verschlossen wird. Durch ein infolge der Verbrennung in das Resonanzrohr ausströmendes Heißgas wird der Überdruck im Brennraum reduziert, so dass durch die Ventile neues Brenngasgemisch nachströmt und selbst zündet. Dieser Vorgang des Schließens und Öffnens der Ventile durch Druck und Unterdruck erfolgt selbst regelnd periodisch. Der pulsierende Verbrennungsprozess im Brennraum setzt mit der Ausbreitung einer Druckwelle im Resonanzrohr Energie frei und regt dort eine akustische Schwingung an. Das Wirkprinzip des Pulsationsreaktors gleicht dabei dem eines akustischen Hohlraumresonators, der aus einem Brennraum, einem Resonanzrohr, das einen gegenüber dem Brennraum deutlich verminderten Strömungsquerschnitt aufweist besteht. Aus der WO 02/072471 bzw. aus der DE 10 2004 044 266 A1 sowie DE 10 2006 046 805 A1 und DE 10 2006 027 133 A1 sind beispielsweise Pulsationsreaktoren bekannt.

Im Pulsationsreaktor wird das pulsierende Heißgas über eine flammenlose Verbrennung erzeugt, dass heißt, dass keine kontinuierliche Verbrennung des Brenngases in sichtbarer Form einer Flamme stattfindet. Vielmehr erfolgt durch die periodische Aufgabe des Brenngases und der anschließenden Zündung eine periodische explosionsartige Verbrennung ohne Flammenausbildung.

Ein bekannter Nachteil der Pulsationsreaktor-Technologie ist, dass die Frequenz der pulsierenden Heißgasströmung nicht direkt beeinflusst bzw. eingestellt werden kann (selbst regelndes System). Die wesentlichen Einflussgrößen auf die Frequenz der pulsierenden Heißgasströmung sind die Geometrie des Reaktors (Helmholzresonators), Art und Menge der Rohstoffmischung sowie die Prozesstemperatur. Die Geometrie des Reaktors ist feststehend. Indirekt kann entsprechend die Frequenz über die Prozesstemperatur variiert werden, wobei diese im technischen Betrieb durch die notwendige Behandlungstemperatur im Wesentlichen vorgegeben ist.

De facto kann die Frequenz der pulsierenden Heißgasströmung derzeit nicht eingestellt werden. Da jedoch gerade dieser pulsierende Heißgasstrom die besonderen Reaktionsbedingungen im Reaktor erzeugt, reduziert die nicht variierbare Frequenz der pulsierenden Heißgasströmung die Leistungsstärke des Reaktors.

Der Erfindung liegt die Aufgabe zu Grunde, ein verbessertes Verfahren zur Herstellung von feinteiligen Partikeln anzugeben, bei dem die besonderen Vorteile der Partikelbildung in einem pulsierenden Heißgasstrom genutzt werden.

Die Aufgabe wird erfindungsgemäß durch die im Anspruch 1 angegebenen Merkmale gelöst.

Vorteilhafte Weiterbildungen der Erfindung sind Gegenstand der Unteransprüche.

Beim erfindungsgemäßen Verfahren zur Herstellung von feinteiligen Partikeln in einem pulsierenden Heißgasstrom in mindestens einem Reaktionsraum werden die Partikel durch Zuführung einer Rohstoffmischung in den pulsierenden Heißgasstrom, der mit variabel einstellbaren Druckamplituden und Schwingungsfrequenz durch eine Brennerflamme eines Brenners mit periodischer Druckschwingung erzeugt wird, gebildet und in einem der Brennkammer nachgeordneten Filtersystem vom Heißgasstrom abgetrennt, wobei der Ausbreitungsraum und/oder der Turbulenzgrad des Heißgasstroms durch eine Änderung der Position des Brenners in der Brennkammer bzw. mittels eines Strömungselements in der Brennkammer eingestellt wird, wobei in diesem derart eingestellten Heißgasstrom die Partikel aus der Rohstoffmischung gebildet werden.

D.h. der pulsierende Heißgasstrom wird durch eine definierte Brennerflamme mit periodischer Druckschwingung erzeugt, wobei die Frequenz der Pulsation über die Parameter der Brennerflamme variiert werden kann.

In einer bevorzugten Ausführungsform wird die periodische Druckschwingung der Brennerflamme durch Einstellung von Brennerparameter, wie z. B. der Gesamtgasmenge, der Quantität und/oder Art der verschiedenen konzentrisch Gasströme, Drallwinkel, mit einer variabel einstellbaren Schwingungsfrequenz im Bereich von 5 Hz bis 150 Hz sowie mit einer Druckamplitude im Bereich von 5 mbar bis 50 mbar eingestellt.

Zur Erzeugung des pulsierenden Heißgasstroms wird dabei das so genannte "thermoakustische" Phänomen genutzt, das in technischen Verbrennungssystemen als bekanntes Problem auftritt. Bei diesem Phänomen kommt es in Abhängigkeit der eingestellten Betriebsbedingungen, wie beispielsweise Luftzahl oder thermische Leistung, in Kombination mit den Eigenschaften des gewählten Verbrennungssystems (Brenner- bzw. Flammentyp, Art der Mischungsaufbereitung, Brennkammergeometrie, usw.) zu zeitlich instationären Verbrennungszuständen, welche sich in zeitperiodischen Druckschwankungen der Rauchgasströmung auswirken. Besonders die Instabilität von Flammen kann dabei Pulsierung und Dröhnen verursachen. Hierbei treten Resonanzerscheinungen zwischen Flammen und Ofenraum auf.

Teilweise werden mit instationären Verbrennungs- oder Zündinstabilitäten auch Phänomene wie Abblasen oder Zurückschlagen von Flammen in Verbindung gebracht, welche jedoch mit den zu beobachtenden zeitlich instationären Verbrennungsinstabilitäten nicht zu vergleichen sind.

Die für das Verfahren notwendigen periodischen Verbrennungsinstabilitäten kann man hingegen in zwei grundsätzliche Kategorien unterteilen. Zum einen in die zwangserregten Instabilitäten, bei welchen die periodischen Störungen im Verbrennungssystem durch Eingriff von außen aufgeprägt werden, z.B. durch das periodische Ansprechen von Regelventilen. Zum anderen können die Störungen auch über verschiedene Rückkopplungsmechanismen innerhalb des Verbrennungssystems sich selbst anregen und auch selbst erhalten.

Da starke Schwingungsfrequenzen und Druckamplituden in der Praxis unerwünscht und nicht akzeptabel sind, werden zahlreiche Vorkehrungen getroffen, damit die Schwingungsfrequenzen und Druckamplituden deutlich reduziert oder verhindert werden.

Für das Verfahren sollen hingegen die Schwingungsfrequenzen und Druckamplituden durch die Art des Brennersystems, die Wahl der Brennerparameter und die geometrische Form des Reaktors nicht unterdrückt, sondern gezielt gefördert und eingestellt werden. Daraus resultiert ein einstellbarer pulsierender Heißgasstrom.

Die Art des verwendeten Brennersystems stellt damit eine wesentliche Einstellgröße für die resultierende Schwingungsfrequenzen und Druckamplituden des Heißgasstromes dar. Prinzipiell eignen sich alle Brennersysteme, bei denen die Brennerparameter so eingestellt werden können, dass die Brennerflamme den Heißgasstrom in eine periodische Schwingung versetzen kann.

Die Verwendung von so genannten Gasbrennern (als Energieträger wird Brenngas verwendet) stellt dabei eine bevorzugte Variante dar, da die schnellere Zündung und die schnellere rückstandsfreie Verbrennung gegenüber dem Einsatz von flüssigen oder festen Brennstoffen Vorteile in der Prozessführung aufweisen. Solche Gasbrenner können Brenner ohne Vormischung (beispielsweise Parallelstrombrenner, Kreuzstrombrenner, Wirbelstrombrenner etc.) oder Brenner mit Vormischung (Kugelbrenner, Wirbelstrahlbrenner etc.) sein.

In einer bevorzugten Ausführungsform stellt der verwendete Brenner einen Drallbrenner dar.

Bekannt ist, dass Drallflammen eine verstärkte Neigung zum Auftreten selbst regelnder Druck- und Flammenschwingungen im Vergleich zu anderen Flammentypen zeigen. Dies wird im Wesentlichen durch ihre hohen volumetrischen Reaktionsdichten bewirkt, aus denen eine deutliche Absenkung der flammeninternen Verzugszeit und somit kürzere Ansprechzeiten auf Störungen der Gemischströmung am Brenneraustritt resultiert. [Schwingungsstabilität mager-vorgemischter Drallflammen in Abhängigkeit von der Gemischvorwärmung; M.Lohrmann, H. Büchner; VDI Berichte Nr. 170; 2003]. Entsprechend sind Drallflammen für die Erzeugung eines erfindungsgemäßen genutzten pulsierenden Heißgasstroms mit hohen Schwingungsfrequenzen und Druckamplitude besonders geeignet.

Beschreibungen von Entstehungsmechanismen thermo-akustischer Druckschwingungen sind in der Literatur bekannt. So beschreiben beispielsweise H. Büchner, W. Leukel und A. Hilgenstock ihre experimentellen und theoretischen Untersuchungen der Entstehung thermoakustischer Druckschwankungen in einem industriellen Vormischbrenner (VDI Berichte NR. 1193,1995). Dort werden die Auswirkungen einer periodischen Strömungsinstabilität im turbulenten Strömungsfeld des untersuchten Vormischbrenners auf das zeitliche Reaktionsverhalten der sich ausbildenden Flamme beschrieben. In einer anderen Veröffentlichung diskutieren Ch. Külsheimer, H. Büchner, W. Leuckel, H. Bockhorn und St. Hoffmann ihre Ergebnisse zu Untersuchungen der Entstehungsmechanismen für das Auftreten periodischer Druck/Flammenschwingungen in hochturbulenten Verbrennungssystemen (VDI Berichte Nr. 1492, 1999). Experimentelle Untersuchungen der Strömung und Vermischung in einem Drallbrennermodel werden durch R. Palm (Dissertation 2006, Darmstadt) beschrieben.

Aus diesen und zahlreichen weiteren Literaturstellen resultiert die Erkenntnis, dass bei Kenntnis des anlagenspezifischen frequenzabhängigen Druckübertragungsverhaltens von Brenner und Brennkammer (eventuelle weiterer angeschlossener Bauteile) jene Kombination der feuerungstechnischen Parameter thermische Leistung und Luftzahl einstellbar ist, damit sich eine selbst erhaltende Druckschwingung im Wirkungskreis Brenner-Flamme-Brennkammer ausbildet. Durch Variation verbrennungstechnisch relevanter Prozessgrößen, wie beispielsweise Strömungsfeld, Flammengeometrie, Mischungscharakteristiken, Wärmefreisetzung, Temperaturfeld, Schadstoff-Emissionsverhalten, Wärmeübertragung, kann Einfluss auf Schwingungsfrequenz und Druckamplitude genommen werden.

Das Phänomen der unstetigen Verbrennung und der Ausbildung solcher Druckschwankungen ist aus zahlreichen industriellen Verbrennungsanlagen wie Gasturbinenbrennkammern, Winderhitzern, Rückstandsverbrennungsanlagen oder anderen Industrieöfen bekannt. Eine gezielte Nutzung dieser thermo-akustischen Druckschwankungen zur gezielten Herstellung von feinteiligen Pulvern ist aus der Literatur hingegen nicht bekannt.

Vielmehr sind die thermo-akustischen Druckschwankungen dort weitgehend unerwünscht, da sie neben der erhöhten Lärmbelästigung auch Verbrennungsinstabilitäten bewirkt. Zusätzlich tritt eine verstärkte mechanische und/oder thermische Beanspruchung der Brennkammer auf, was bei ungünstigen Flammen-Druckschwingungen bis zur Zerstörung der Anlage führen kann. Entsprechend wird ein erheblicher Aufwand betrieben, um solche Druckschwingungen zu vermeiden. Geeignete Maßnahmen sind dazu beispielsweise aus EP 0754908 A2 bekannt.

In dem erfindungsgemäßen Verfahren werden die Vorteile eines pulsierenden Heißgasstroms zur Herstellung von feinteiligen Partikeln, also beispielsweise ein deutlich erhöhter Wärmeübergang resultierend aufgrund der hohen Strömungsturbulenzen bedingt durch die pulsierende Verbrennung, genutzt. Dazu werden bekannte Brennersysteme, beispielsweise ein Drallbrenner, nun genau derart betrieben, dass sich kontinuierliche Druckschwankungen einstellen. Durch Variation der verbrennungstechnischen Parameter gelingt es dem Fachmann, unterschiedliche Schwingungsfrequenzen und/oder Druckamplituden einzustellen.

Als Brenngas eignet sich grundsätzlich jedes Gas, das zur Heißgaserzeugung geeignet ist. Vorzugsweise wird Erdgas und/oder Wasserstoff verwendet. Alternativ kann auch Propan oder Butan oder Gemische aus verschiedenen Brennstoffen als Brennstoff verwendet werden.

Als Verbrennungsluft wird Umgebungsluft verwendet, alternativ kann Sauerstoff oder ein Gemisch aus beiden eingesetzt werden. Über die Menge an Verbrennungsluft im Verhältnis zum Brenngas kann beispielsweise eine oxidierende oder reduzierende Atmosphäre eingestellt werden. Daneben kann die Gasatmosphäre durch Zugabe weiterer Gase, zum Beispiel CO₂, gezielt eingestellt werden und bietet damit eine weitere Steuerungsgröße zum Einstellen der Reaktionsparameter bei der thermischen Herstellung und Behandlung der feinteiligen Partikel.

Der Brenner ist in eine Brennkammer integriert, die ausgangsseitig mindestens eine Öffnung für das entstehende Heißgas aufweist. Dabei kann die Öffnung Ventile aufweisen, die selbstregelnd oder regelbar sind. Das durch den Brenner in die Brennkammer einströmende Brenngasgemisch bildet den Heißgasstrom, welcher die Brennkammer durch die ausgangsseitige Öffnung verlässt.

Dabei hat die Brennkammer im Regelkreis eines Verbrennungssystems eine große Bedeutung, da sie als Resonator für die auftretenden Druckschwankungen wirkt, d.h. in einem von der Brennkammergeometrie abhängigen Frequenzbereich werden Druckschwankungen um ein Vielfaches verstärkt. Die Verstärkung wird durch Reibungsverluste innerhalb des Heißgases oder Heißgasstromes sowie bei Wechselwirkung des Heißgases bzw. Heißgasstromes mit der Brennkammerwand limitiert, so dass ein unendliches Anwachsen der Druckamplituden, wie es bei mit der Resonanzfrequenz angeregten, ungedämpften Schwingungssystemen der Fall ist, unmöglich wird. Das Übertragungsverhalten entspricht damit im Wesentlichen einem Verzögerungsglieds 2. Ordnung, bei dem die maximale Amplituden der Antwortschwingung aufgrund von Energiedissipation beschränkt wird. Die sich einstellenden Resonanzfrequenzen sind entsprechend abhängig von der Brennkammergeometrie.

In einer nicht erfindungsgemäßen Ausführungsform kann der Brenner fest mit der Brennkammer verbunden sein, zum Beispiel am Brennkammerboden verschraubt. Damit wird die Position des Brenners in der Brennkammer fixiert. Somit ist der Ausbreitungsraum des Heißgasstroms in der Brennkammer (begrenzende Geometrie) festgelegt.

Gemäß der Erfindung wird die Position des Brenners in der Brennkammer (axial und/oder radial) mittels einer Vorrichtung verändert. Durch die Veränderung der Brennerposition ändert sich der Ausbreitungsraum (geometrische Begrenzung) des sich bildenden Heißgasstroms. Die Geometrie beeinflusst die Resonanzfrequenz und damit die Pulsation des Heißgasstromes. Über die Position des Brenners in der Brennkammer kann entsprechend die resultierende Pulsation des Heißgasstroms eingestellt werden.

Weiterhin weist gemäß der Erfindung die Brennkammer mindestens ein Strömungselement auf, wodurch der Turbulenzgrad des sich bildenden Heißgasstroms beeinflusst wird. Ein hoher Turbulenzgrad ist verbunden mit einer homogenen Temperaturverteilung in der Brennkammer und im Reaktionsraum und fördert eine homogene Partikelbildung sowie die anschließende thermische Behandlung der gebildeten Partikel. Die Auswahl der Strömungselemente anhand der Aufgabenstellung stellt dabei für den Fachmann keinerlei Schwierigkeit dar.

Durch die Verbrennung der Brenngase in der Brennkammer wird ein Heißgasstrom mit einer definierten Prozesstemperatur erzeugt, wobei die Prozesstemperatur beispielsweise durch die Menge an Brenngas einstellbar ist. Die Prozesstemperatur des pulsierenden Heißgasstroms ist eine wesentliche Einstellgröße für die sich ausbildende Partikelform und die Art der thermischen Behandlung der gebildeten Partikel. Bei einer Brennkammer aus Stahl ist die maximale Prozesstemperatur in der Brennkammer, je nach Stahlart, zunächst auf ca. 1100°C begrenzt.

Das Brennkammergehäuse kann jedoch mit Wasser gekühlt werden, um höhere Gastemperaturen im Brennraum realisieren zu können. Alternativ kann die Brennkammer aus hochtemperaturbeständiger Keramik bestehen oder zumindest der Brennraum beschichtet bzw. ausgekleidet sein. Entsprechend können so maximale Prozesstemperaturen von 1800°C in der Brennkammer erreicht werden.

An die Brennkammer schließt sich mindestens ein Reaktionsraum an, wobei die Brennkammer über die Brennkammeröffnung mit diesem Reaktionsraum verbunden ist. Bedingt durch die gewählten Abmessungen des Reaktionsraums in Verbindung mit den gewählten Prozessparametern kann der Reaktionsraum als Trocknungsraum, als Kalzinationsraum und/oder als Kristallisationsraum dienen.

Die resultierende Resonanzfrequenz des Gesamtsystems ist entsprechend nicht allein durch die Geometrie der Brennkammer zu beschreiben, da aufgrund der Ausströmung des Heißgasstromes durch die Brennkammeröffnung eine größere Gasmasse in Schwingung gerät, als durch die Brennkammergeometrie begrenzt wird. Diese zusätzliche Gasmasse wirkt wie eine Geometrieerweiterung und erniedrigt die tatsächliche Resonanzfrequenz im Vergleich zur eigentlichen Resonanzfrequenz der alleinigen Brennkammer. Die geometrische Ausbildung der einzelnen Bauteile des Reaktors beeinflusst entsprechend die Pulsation des Heißgasstroms.

In einer bevorzugten Ausbildungsform stellt der thermische Reaktor einen Helmholtz-Resonator dar. Das resonanzfähige System des Helmholtz-Resonator ist in guter Näherung mit dem Resonanzverhalten der Brennkammer in Gasthermen und Heizungskesseln zu beschreibt. Die auffälligsten Eigenschaften des Helmholtz-Resonators sind, dass die Resonanzfrequenz wesentlich niedriger ist, als durch eine stehende Welle in der längsten geometrischen Abmessung erklärt werden kann. Ein Helmholtz-Resonator besteht aus einem eingeschlossenen, kompressiblen Gasvolumen, welches über eine kleine Austrittsöffnung mit der Umgebung verbunden ist. Als weitere Besonderheit des Helmholtz-Resonators ist zu erwähnen, dass der Druck, im Gegensatz zur stehenden Welle, keine Funktion des Ortes im resonanzfähigen Volumen ist, sondern sich nur zeitlich-periodisch verändert. Als mechanisches Modell kann man den Helmholtz-Resonator mit einem Feder-Masse Dämpfer-Schwinger vergleichen, bei dem die Feder der kompressiblen, eingeschlossenen Gasmasse entspricht und die schwingende Masse aus der in der Austrittsöffnung befindlichen inkompressiblen Gasmasse besteht. Übertragen auf ein Verbrennungssystem bedeutet dies, dass das kompressible Gasvolumen dem Brennraum entspricht und die schwingende Gasmasse sich in der Querschnittsverengung zum Kamin befindet ("Abgasrohr").

Der Reaktionsraum kann mindestens eine Öffnung, neben der Zuführung des pulsierenden Heißgas, zur Zugabe von gasförmigen Komponenten aufweisen. Darüber gelingt es die Gasatmosphäre im Reaktionsraum auf die notwendigen Bedingungen der gewünschten thermischen Behandlung einzustellen.

Zur Bildung der feinteiligen Partikel wird eine Rohstoffmischung bereitgestellt. Erfindungsgemäß wird aus Rohstoffkomponenten eine Rohstoffmischung hergestellt, die zumindest alle Bestandteile der zu bildenden festen Partikel beinhaltet. Für den Spezialfall, dass nur eine Rohstoffkomponente benötigt wird, findet hier dennoch der Begriff Rohstoffmischung Anwendung. Die aus den Rohstoffkomponenten gebildete Rohstoffmischung kann dabei sowohl als Feststoff, beispielsweise in Form eines feinteiligen Pulvers, in Form einer Lösung, einer Suspension, einer Dispersion bzw. Emulsion, eines Gels, als Gas oder Dampf vorliegen. Bei Verwendung von flüssigen Rohstoffmischungen, wie Lösungen, Dispersionen oder Emulsionen, resultieren besonders sphärische Partikel.

Zur Bildung der Rohstoffmischung werden zunächst mindestens die notwendigen Elemente in Form von Rohstoffkomponenten zu einer Rohstoffmischung im entsprechenden stöchiometrischen Verhältnis kombiniert. Als Rohstoffkomponenten (auch Edukte genannt) für die Herstellung der Partikel kommen anorganische und/oder organische Stoffe wie beispielsweise Nitrate, Chlorite, Carbonate, Hydrogencarbonate, Carboxylate, Alkoholate, Acetate, Oxalate, Citrate, Halogenide, Sulfate, metallorganische Verbindungen, Hydroxide oder Kombinationen dieser Stoffe in Betracht. Diese Stoffe sind die Basiskomponenten der Rohstoffmischung. Die Rohstoffmischung enthält gegebenenfalls organische oder anorganische Lösungsmittel oder weitere flüssige Komponenten, wobei im Fall einer Dispersion oder Emulsion mindestens zwei flüssige Phasen nicht miteinander mischbar sind.

Die Rohstoffmischung kann so genannte Impfkristalle beinhalten. Dabei sind die Impfkristalle strukturell isotyp mit der Zielphase der herzustellenden feinteiligen Partikel und dienen als Kristallisationskeime, an denen sich Substanz, im vorliegenden Fall aus zumindest einer der Rohstoffkomponenten, im Heißgasstrom abscheidet. Durch Einsatz von Impfkristallen kann die Phasenbildung beim thermischen Prozess beeinflusst werden und damit die Phasenzusammensetzung der feinteiligen Pulver.

Weiterhin kann eine organische und/oder anorganische kalorische Komponente als Rohstoffkomponente zugegeben werden. Damit ist eine Komponente gemeint, die in einem thermischen Prozess zusätzlich kalorische Energie innerhalb des sich bildenden Partikels und/oder im Bereich zwischen den Partikeln freisetzt und damit beispielsweise eine Phasenbildung beschleunigt.

Eine besonders enge und definierte Kornverteilung der Partikel kann beispielsweise durch einen ein- oder mehrstufigen nasschemischen Zwischenschritt vor der thermischen Behandlung im Reaktor erreicht werden. Dazu kann über die Art und Weise und die Prozessführung des nasschemischen Zwischenschritts, beispielsweise über eine so genannte Cofällung, die Partikelgröße zunächst in der Rohstoffmischung eingestellt werden. Bei der Einstellung der Partikelgröße ist zu beachten, dass sie durch den folgenden thermischen Prozess verändert werden kann. Für den nasschemischen Zwischenschritt einer wässrigen und/oder alkoholischen Rohstoffmischung können bekannte Methoden wie beispielsweise Cofällung oder Hydroxidfällung angewandt werden.

Das Einbringen von brennbaren Substanzen in den thermischen Reaktor, wie Emulgatoren, Tensiden, zusätzliche organische Komponenten wie Petrolether, kann durch Reduzierung der Brenngaszufuhr zum thermischen Reaktor entsprechend kompensiert werden.

Die Rohstoffmischung kann dem pulsierenden Heißgasstrom in der Brennkammer, in einem Reaktionsraum oder dazwischen zugeführt werden. Flüssige Rohstoffmischungen, wie Lösungen, Suspensionen, Emulsionen oder Dispersionen, können beispielsweise durch feines Verdüsen oder Zerstäuben in den Heißgasstrom eingetragen werden. Gasförmige Rohstoffe oder Rohstoffmischungen bzw. Dämpfe können in den thermischen Reaktor eingeleitet werden. Dazu werden die Rohstoffe bzw. Rohstoffmischung zunächst außerhalb des beschriebenen thermischen Reaktors in die Gas- bzw. Dampfphase überführt, z. B. durch einen Verdampfer und dem Reaktor zugeführt. Feste Rohstoff können beispielsweise über ein Fallrohr dem pulsierenden Heißgasstrom zudosiert werden. Es besteht dabei auch die Kombination verschiedener Zuführungsformen.

Durch die Wahl des Zuführungspunktes werden beispielsweise die Verweilzeit sowie das Temperaturprofil der sich bildenden Partikel vorgegeben. Daraus resultiert eine charakteristische mittlere Partikelgröße, Partikelgrößenverteilung, spezifische Oberfläche und Reaktionsfortschritt. Damit stellt die Wahl des Zuführungspunktes eine wichtige Steuerungsgröße des thermischen Prozesses und somit zur Einstellung der Eigenschaften der Partikel dar.

Die resultierenden Partikeleigenschaften, wie beispielsweise Partikelgröße / -verteilung, Oberflächenbeschaffenheit, Phasenzusammensetzung etc., können zusätzlich über weitere prozesstechnische Parameter beeinflusst werden. So kann beispielsweise durch Variation der Durchmesser von Düsen zur Zuführung der Rohstoffmischung und/oder von Druckluft an der beispielsweise als Zweistoffdüse ausgebildeten Düse die Tröpfchengröße beim Eindüsen der Rohstoffmischung in den thermischen Reaktor beeinflusst werden. Zusätzlich reduzieren Komponenten wie beispielsweise Tenside die Oberflächenspannung der Rohstofflösung und führen zu kleineren Tröpfchen beim Eindüsen.

Durch die gezielte Steuerung des Temperaturprofils im thermischen Reaktor und/oder der Variation der Verweilzeit werden ebenfalls die Partikeleigenschaften beeinflusst. Beispielsweise wird bei feinteiligem Einsprühen von flüssigen Rohstoffmischungen die resultierende Tropfengröße und entsprechend die Partikelgröße durch die Temperatur am Aufgabeort beeinflusst. Die Verweilzeit und das Temperaturprofil beeinflussen beispielsweise die Phasenzusammensetzung.

Das Temperaturprofil im thermischen Reaktor ist auf verschiedene Arten einstellbar. Zunächst einmal kann durch die Brennstoffmenge die Wärmezuführung über den Brenner eingestellt werden. Damit eine vollständige Verbrennung in der Brennkammer sichergestellt wird, darf eine minimale Brenntemperatur nicht unterschritten werden. Andernfalls findet keine vollständige Verbrennung des Brennstoffes statt, so dass sich Kohlenstoff und/oder Kohlenmonoxid bilden und mit dem pulsierendem Heißgasstrom aus der Brennkammer in andere Anlagenteile, eventuell weiter bis in den Filter, ausgetragen werden kann und sich dort eventuell in Verbindung mit Sauerstoff umsetzt. Dadurch kann es zu einer Strähnenbildung im Heißgasstrom (Turbulenzgrad reduziert) und lokalen Wärmespots in der Anlage und folglich zu einer inhomogenen Produktqualität kommen. Denkbar ist auch die Verunreinigung des feinteiligen Pulvers mit Kohlenstoff. Entsprechend der Brennerleistung sowie der Materialbeschaffenheit der Brennkammer können so Prozesstemperaturen in der Brennkammer zwischen 600° und 1800°C eingestellt werden.

Für unterschiedliche Aufgabenstellungen sind die genannten Prozesstemperaturen zu hoch. Beispielsweise können bei bestimmten Materialien unerwünschte Sintererscheinungen mit der Folge von Kornwachstum oder Agglomeration auftreten. Entsprechend kann dem pulsierenden Heißgasstrom an unterschiedlichen Stellen, zum Beispiel zwischen Brennkammer und Reaktionsraum, zwischen zwei Reaktionsräumen oder in mindestens einem Reaktionsraum, ein Kühlmedium, zum Beispiel Kühlgas oder Kühlflüssigkeit, zugeführt werden. In einer vorteilhaften Ausführungsform wird der Kühlmediumstrom pulsierend dem Heißgastrom phasengleich zugeführt. Damit wird die Pulsation des Heißgasstroms nicht reduziert, kann im Gegenteil sogar verstärkt werden. Die Zuführung kann beispielsweise mittels gesteuerter Magnetventile erfolgen. Damit können niedrige thermische Behandlungstemperaturen im Bereich 100 - 600 °C eingestellt werden.

Neben einer Kühlung des pulsierenden Heißgasstroms kann auch eine auf den Heißgasstrom bezogene nachträgliche Erhöhung der Prozesstemperaturen realisiert werden. Dies ist beispielsweise dann von Vorteil, wenn eine sehr hohe Prozesstemperaturen am Aufgabeort zu einer Krustenbildung bei den Rohstofftröpfchen durch Verdampfung an der Tröpfchenoberfläche und der damit verbundenen Aufkonzentration der Inhaltsstoffe an der Tröpfchenoberfläche, führt. Diese Kruste steht zunächst dem Entweichen von gebildeten gasförmigen Stoffen (z.B. thermische Zersetzung der Lösungsmittel oder Abspaltung von Nitrat) aus dem Inneren der Rohstofftröpfchen entgegen. Durch den Gasdruck werden jedoch letztlich die Krusten aufgebrochen und es bilden sich Partikel mit so genannter Hohlkugelstruktur. Dies gilt beispielsweise bei der Verwendung von wässrigen Rohstoffmischungen. Die Bildung von Partikeln mit Hohlkugelstruktur ist jedoch für bestimmte Anwendungen unerwünscht. Durch die Reduzierung des Energieeintrags am Zuführungspunkt der Rohstoffmischung, zum Beispiel durch die Begrenzung der Prozesstemperatur in der Brennkammer oder Zuführung von Kühlmedien, kann eine solche Krustenbildung auf den sich bildenden Partikeln vermieden werden. Die Begrenzung der Prozesstemperatur am Einsprühpunkt kann jedoch zur Folge haben, dass keine vollständige Stoffumwandlung, zum Beispiel die thermische Zersetzung von Salzresten, realisiert werden kann. Durch eine nachträgliche Temperaturerhöhung erfolgt eine vollständige Stoffumwandlung. Die zusätzliche Wärmeenergie kann als Heißgasstrom zugeführt und/oder durch ein zusätzliches Brennersystem erzeugt werden. Vorteilhaft ist dabei eine zum Heißgastrom phasengleiche pulsierende Zuführung. Damit wird die Pulsation des Heißgasstroms nicht reduziert, kann im Gegenteil sogar verstärkt werden.

Die Verweilzeit der sich bildenden Partikel kann neben der geometrischen Ausdehnung des Reaktors, speziell des Reaktionsraumes und der Wahl des Aufgabeorts durch die Strömungsgeschwindigkeit des Heißgasstroms eingestellt werden. Dadurch können Phasenbildungsreaktionen vollständig oder bis zu definierten Fortschreitungsgraden durchgeführt werden.

Nach der Bildung der Partikel kann eine ein- oder mehrstufige in-situ-Beschichtung der Partikel im thermischen Reaktor erfolgen. Im thermischen Reaktor ist bei einer geeigneten Wahl des Prozessablaufes sowohl eine rein anorganische Beschichtung als auch eine organische Beschichtung bzw. eine Kombination aus beiden möglich. Der Begriff Beschichtung soll dabei sowohl eine Beschichtung im engeren Sinne als auch eine Imprägnierung der Partikel bezeichnen. Dazu bestehen zwei prinzipiell verschiedene Wege zur in-situ Beschichtung im thermischen Reaktor.

Zum einen gelingt eine zumindest teilweise Beschichtung von gebildeten festen Partikeln durch eine geeignete Rohstoffkombination der hergestellten Rohstoffemulsion bzw. -dispersion. Dabei beinhaltet die Rohstoffmischung zumindest die Komponenten zur Bildung der zu beschichtenden Partikel. Der mit dieser Rohstoffmischung nicht mischbaren flüssigen Phase werden zumindest die Beschichtungskomponenten zugegeben. Aus diesen beiden nicht mischbaren Mischungen wird eine Rohstoffdispersion oder -emulsion hergestellt und in den pulsierenden Heißgasstrom eingebracht. Durch die Wahl eines geeigneten thermischen Behandlungsregimes gelingen die Bildung der festen Partikel und eine zumindest teilweise Beschichtung dieser Partikel.

Zum anderen kann eine Beschichtung der Partikel durch ein separates Zuführen einer geeigneten Beschichtungskomponente oder -mischung auf die gebildeten festen Partikel erfolgen. Dazu wird zunächst eine Beschichtungsmischung hergestellt, die zumindest alle Komponenten zur Bildung der Beschichtung beinhaltet. Die flüssige, gasförmige oder in Form eines Dampfes ausgebildete Beschichtungsmischung wird dem pulsierenden Heißgasstrom an einem Ort zugeben, der bezogen auf die Heißgasstrom hinter dem Ort der Bildung der zu beschichtenden Partikel liegt. Durch die Wahl der Prozessparameter können definierte Beschichtungsformen, beispielsweise Schichtdicke oder Modifikation der Beschichtung, realisieren werden.

Die im pulsierenden Heißgasstrom erzeugten feinteiligen Partikel werden mit einer geeigneten Abscheideinrichtung, wie beispielsweise einem Gaszyklon, einem Oberflächen- oder einem Elektrofilter, von dem Heißgasstrom abgetrennt. Das Heißgas wird vor seinem Eintritt in die Abscheideinrichtung auf die je nach dem Typ der Abscheideinrichtung erforderliche Temperatur abgekühlt. Dies erfolgt beispielsweise durch einen Wärmetauscher und/oder durch Einleiten von Kühlgasen in den Heißgasstrom.

Durch das erfindungsgemäße Verfahren werden beschichtete oder unbeschichtete Partikeln mit einer mittleren Partikelgröße von 5 nm bis 100 µm generiert. Der Chemismus der Partikel wird dabei durch die Zusammensetzung der Rohstoffmischung bzw. der Beschichtungsmischung und die eingestellten Prozessparameter bestimmt.

Eine entscheidende Einstellgröße stellt dabei die Gasatmosphäre dar. Die Zusammensetzung der Gasatmosphäre kann auf unterschiedliche Weisen eingestellt werden. Zum einen kann die Gasatmosphäre über die Art des Brenngases, die Art der Verbrennungsluft (Sauerstoff, Luft, Umgebungsluft ...) und die Verhältnisse dieser beiden zueinander eingestellt werden. Zum Beispiel kann die Verbrennungsluftzahl (λ) darüber eingestellt werden. Zum anderen kann die Gasatmosphäre über die Zugabe von zusätzlichen Prozessgasen, wie beispielsweise CO₂, CO, N₂, O₂, an unterschiedlichen Zuführungspunkten im thermischen Reaktor eingestellt werden. Außerdem können Stoffe zugegeben werden, die die Gasatmosphäre beeinflussen, zum Beispiel oxidierend oder reduzierend, wobei diese Stoff entweder über einen Gasstrom separat, über die Brennstoff- oder Verbrennungsluftzuführung oder über die Rohstoffmischung dem thermischen Reaktor zugeführt werden können. Beispiele für solche Stoffe sind die mögliche Zugabe von Kohlenstoff (c, beispielsweise als Kohlestaub direkt in die Brennerflamme) oder Wasserstoffperoxyd.

So werden beispielsweise oxidische / hydroxidische Partikel in oxidierender Atmosphäre generiert. Dabei können monomodale Oxide der Form MeO bzw. MeₓO_{y}, der I. bis V. Hauptgruppe, wie beispielsweise MgO, CaO, Al₂O₃, SnO₂, SiO₂, aber auch der Nebengruppenelemnte, wie beispielsweise Y₂O₃, TiO₂, Cr₂O₃, MnO, Fe₂O₃, CuO, ZnO, ZrO₂, erzeugt werden. Neben den monomodalen Oxiden sind auch Mischoxide, wie beispielsweise der Mineralgruppe Spinell, Mullit, Granate, Silikate, Phosphate, Sulfate, Karbonate oder Hydroxide oder Hydrate herstellbar.
Wird beim erfindungsgemäßen Verfahren eine reduzierende Atmosphäre eingestellt, können Mineralphasen der Gruppen Sulfide, Nitride, Carbide generiert werden.

Die stöchiometrischen Zusammensetzungen der Mineralphasen sind, so auch in der Natur, oft vereinfachte Hauptchemismen einer Mineralart, die nicht immer den genauen Chemismus des Mineralindividuums entsprechen muss. Vielmehr kommt es zu Abweichungen durch Fehlordnungen im Mineralgitter. Diese Abweichungen führen teilweise zu veränderten Eigenschaften, die in der Technik gezielt durch die Herstellung von dotierten Phasen ausgenutzt werden. Durch den Zusatz von Dotierungselementen können solche dotierten Mineralarten über das erfindungsgemäße Verfahren generiert werden. Beispiele dafür sind Katalysatoren, multinäre Oxide als Hochtemperatur-Supraleiter-Materialien (HTSL), Leuchtstoffe oder stabilisiertes ZrO₂ (z.B. durch 3 mol-% Y₂O₃).

Teilweise existieren bei gleicher chemischer Zusammensetzung unterschiedliche Modifikationen (z.B. Ti02; Ruti, Anatas, Brookit). Durch beispielsweise die Einstellung der Prozesstemperatur können die unterschiedlichen Modifikationen mittels des erfindungsgemäßen Verfahrens generiert werden.

In einer Ausführungsform werden Pulver mit nanoskaligen Partikeln , beispielsweise ZnO, Al₂O₃, ZrO₂ (3 mol% Y₂O₃ teilstabilisiert), durch Einsatz von Rohstofflösungen im erfindungsgemäßen Verfahren hergestellt. Eingesetzt werden dabei acetathaltige oder metallorganische Ausgangsstoffe. Diese Ausgangsstoffe werden dabei im erfindungsgemäßen Verfahren thermisch zersetzt, zum Beispiel zum Oxid und bilden die Endpartikel.

In einer bevorzugten Ausführungsform werden die Ausgangsstoffe (Acetate, metallorganische Verbindungen) zumindest nicht vollständig thermisch zersetzt, dass heißt ein Teil der Ausgangsverbindung (z.B. Acetat) oder ein Teil der Umwandlungsprodukte gelangen als Partikelbestandteil oder anhaftend an der Partikeloberfläche in des nanoskalige Endpulver. Vorteil dieser Ausführungsform ist, dass sich diese feinteiligen Pulver besser Dispergieren lassen als nanoskalige Pulver ohne diese Bestandteile (Rückstände). Unter Dispergiereigenschaften werden dabei die Parameter verstanden, die durch das Zuführen der nanoskaligen Partikel zu flüssigen Medien, beispielsweise Benetzbarkeit, Agglomerationsbildung bzw. -stärke, Stabilität der Suspension, festzustellen sind. Gute Dispergierbarkeit heißt, dass die Partikel ohne Zuführung hoher Energie (z.B. Ultraschall), möglichst agglomeratfrei dispergiert werden können. Die Dispergiereigenschaften werden durch eine Vielzahl von Parametern bestimmt, z.B. Partikelgröße, Agglomerationsgrad, Oberflächenbeschaffenheit. Vergleicht man zwei nanoskalige Pulver mit ansonst identischen Eigenschaftsparametern, wobei ein Pulver diese Rückstände aus der thermischen Acetatzersetzung aufweist, zeigt dieses letztgenannte bessere Dispergiereigenschaften. Zurückzuführen ist dies auf eine bessere Benetzbarkeit der Partikel.

Als vorteilhafte Konzentration an diesen Rückständen für besonders gute Dispergiereigenschaften erweist sich, bezogen auf den Gesamtkohlenstoffgehalt dieser Rückstände, eine C_{ges} - Konzentration von 0,2 bis 1 %, besonders vorteilhaft eine Konzentration von C_{ges} von 0,35 bis 0,65 %. Dabei ist bei der Prozessführung darauf zu achten, dass die Konzentration an elementarem Kohlenstoff, ebenfalls ein mögliches Zersetzungsprodukt im thermischen Prozess, möglichst niedrig ist, damit die Pulver keine unerwünschte charakteristische Graufärbung aufgrund des Kohlenstoffs aufweisen. Der Anteil an elementarem Kohlenstoff muss entsprechend kleiner 0,1 % gehalten werden.

Zum Beispiel werden ZnO - Partikel aus einer wässrigen Zn-Acetatlösung hergestellt. Die Partikelgröße kann beispielsweise mittels Prozesstemperatur, Verweilzeit oder Durchsatzmenge eingestellt werden. So können ZnO - Pulver mit einem mittleren Partikeldurchmesser von 5 nm bis 100 nm generiert werden. Der Anteil an zumindest nicht vollständig umgesetzten Acetaten kann dabei beispielsweise über die Prozesstemperatur, oder Durchsatzmenge eingestellt werden. Ein so hergestelltes ZnO-Pulver kann leichter dispergiert werden als vergleichbares ZnO-Pulver ohne Rückstände aus der Acetatzersetzung. Die Dispergierung von feinteiligen Pulvern hängt dabei von einer Vielzahl von Parametern ab, z.B. von der Partikelgröße, der Oberflächenbeschaffenheit, dem Agglomerationsgrad.

Die unbeschichteten bzw. beschichteten Partikel können einer zusätzlichen einstufigen oder mehrstufigen thermischen Nachbehandlung unterzogen werden, um beispielsweise durch die nachträgliche thermische Behandlung die Oberfläche der Partikel zumindest teilweise zu modifizieren und/oder um eine nachträgliche Phasenmodifikation zu erreichen, gegebenenfalls verbliebene Beschichtungshilfskomponenten zumindest teilweise zu entfernen. Für die thermische Nachbehandlung kommt vorzugsweise ein weiterer thermischer Reaktor, insbesondere ein weiterer Reaktor mit pulsierender Verbrennung oder ein Drehrohrofen oder eine Wirbelschichtanlage zum Einsatz.

Die feinteiligen Partikel werden in einer weiteren Ausführungsform vor und/oder während mindestens einer der thermischen Nachbehandlungen bzw. nach der Partikelherstellung im thermischen Reaktor mit pulsierender Verbrennung zumindest teilweise zusätzlich beschichtet. Dabei können mögliche Agglomerationen der feinteiligen Partikel vorzugsweise durch eine Trockenmahlung oder Nassmahlung vor, während oder nach der zumindest teilweisen Beschichtung zumindest teilweise reduziert werden.

Die feinteiligen Partikel werden in einer bevorzugten Ausführungsform in eine Suspension überführt, wobei eine Agglomeration der Partikel in der Suspension durch eine zusätzliche Nassmahlung zumindest teilweise reduziert werden und/oder die Suspension getrocknet werden kann, beispielsweise zu einem Granulat, wobei dabei eine zusätzliche zumindest teilweise Beschichtung der Partikel erfolgen kann.

Die mit der Erfindung erzielten Vorteile bestehen insbesondere darin, dass bedingt durch den pulsierenden Heißgasstrom ein erhöhter Wärmeübergang vom Heißgastrom auf die Partikel resultiert. Grundsätzlich bildet sich zunächst um jedes Partikel im Heißgasstrom eine Luftschicht, die als isolierend anzusehen ist. Durch den pulsierenden HGS und dem damit verbundenen sehr hohem Turbulenzgrad wird diese Lufthülle der Partikel abgerissen. Die Wärmeenergie kann somit sehr viel schneller vom HGS auf das Partikel übertragen werden.

Durch die pulsierende Bewegung des HGS resultiert eine Relativbewegung zwischen HGS und Partikel, da die Partikel eine höhere Masse, also eine höhere Trägheit, aufweisen. Die Relativbewegung zwischen HGS und Partikel bewirkt zum einen das oben beschriebene Abreißen der Lufthülle um den Partikel, zum anderen wird dabei aber auch Stress auf die Partikeloberfläche erzeugt. Die Kraftwirkung auf die Oberfläche verändert diese. Beispielsweise kommt es zu Grenzschichtablösungen, aber auch die Oberflächenbeschaffenheit wird verändert. Verändern sich die Heißgasparameter, verändern sich entsprechend auch die Eigenschaften der Partikeloberfläche (diese sind natürlich kaum quantitative zu fassen, wirken sich aber gerade auf katalytische Eigenschaften aus).

Festzustellen ist, dass die Prozessparameter des pulsierenden HGS (Frequenz und Druckamplitude) maßgeblich die Partikeleigenschaften beeinflussen. Durch den Wärmeübergang wird das tatsächlich wirkende Temperaturprofil für die Partikel festgelegt. Hoher Wärmeübergang führt zu hohen Temperaturgradienten, hingegen niedrige Wärmeübergänge "puffern" den Gradienten ab. Unterschiedliche Temperaturprofile können zu unterschiedlichen chemischen Reaktionen und letztlich zu unterschiedlichen mineralogischen Phasenausbildungen der Partikel führen. Unterschiedlicher Stress auf die Partikeloberfläche führt zu unterschiedlichen Partikeloberflächen und damit unterschiedlichen Reaktivitäten.

Durch das neuartige Verfahren zum Betreiben des Reaktors können Frequenzen und Druckamplituden zum Teil eingestellt werden und damit die Partikeleigenschaften aktiv beeinflusst werden. Außerdem können höhere Frequenzen und Druckamplituden realisiert werden, die letztlich zu reaktiveren Pulvern führen.

Ausführungsbeispiele der Erfindung werden im Folgenden anhand einer Zeichnung näher erläutert.

Es zeigen:
- Figur 1: schematisch einen thermischen Reaktor R1, wobei ein pulsierender Heißgasstrom durch einen Drallbrenner erzeugt wird und ein Resonanzrohr als Reaktionsraum dient
- Figur 2: schematisch einen thermischen Reaktor R2, wobei ein pulsierender Heißgasstrom durch einen Drallbrenner erzeugt wird und ein zylindrischer Raum als Reaktionsraum dient
- Figur 3: schematisch einen Drallbrenner

Einander entsprechende Teile sind in allen Figuren mit den gleichen Bezugszeichen versehen.

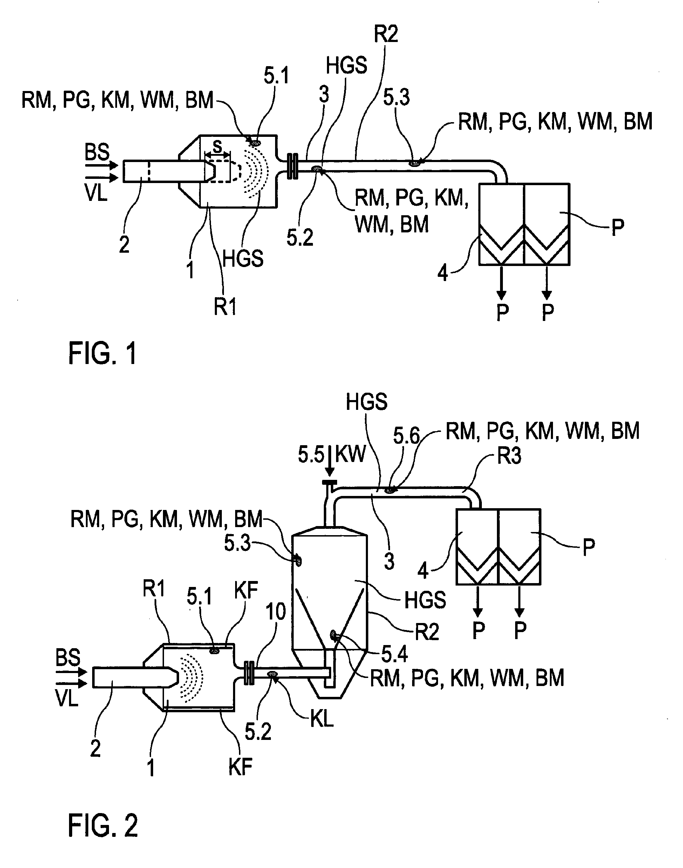

**Figur 1** zeigt als einen ersten Reaktionsraum R1 einen thermischen Reaktor zur Herstellung von feinteiligen Partikeln P mit einer mittleren Partikelgröße von 5 nm bis 100 µm. Der thermische Reaktor (= Reaktionsraum R1) beinhaltet eine Brennkammer 1 mit einem Brenner 2, z.B. einem Drallbrenner, zur Erzeugung eines pulsierenden Heißgasstroms HGS, wobei der Brenner 2 in seiner Position längs zur Brennkammer 1 um den Betrag s variabel ist. Die Parameter der Brennerflamme sowie die Brennerposition werden so eingestellt, dass der sich aus der Verbrennung der Brenngase mit Verbrennungsluft bildende Heißgasstrom HGS eine Schwingungsamplitude im Bereich 5 Hz bis 150 Hz sowie eine Druckamplitude im Bereich von 5 mbar bis 50 mbar aufweist.

Als Brennstoff BS wird dem Brenner 2 ein brennbares Gas, z. B. Erdgas, sowie Verbrennungsluft VL, z.B. Umgebungsluft, zugeführt.

In der dargestellten Figur 1 weist die Brennkammer 1 eine keramische Auskleidung auf. Entsprechend kann die Prozesstemperatur in der Brennkammer 1 über die Menge an Brennstoff BS und/oder Verbrennungsluft VL im Bereich von 600°C bis 1800°C eingestellt werden.

Der erzeugte pulsierende Heißgasstrom HGS strömt vom Brenner 2 durch die Brennkammer 1 und den ersten Reaktionsraum R1 zur Brennkammeröffnung, an die ein zweiter Reaktionsraum R2 angeschlossen ist, wobei der zweite Reaktionsraum R2 als ein Resonanzrohr 3 ausgebildet ist. Der pulsierende Heißgasstrom HGS wird durch die Brennkammeröffnung in den zweiten Reaktionsraum R2 eingeleitet.

Über Zuführungspunkte 5.1 bis 5.n können dem Heißgasstrom HGS zusätzliche Prozessgase PG, z.B. CO₂, N₂ etc., zur Einstellung der Gasatmosphäre zugegeben werden. Darüber hinaus kann der pulsierende Heißgasstrom HGS ab den Zuführungspunkten 5.1 bis 5.n durch Zuführung eines Kühlmediums KM, z.B. Kühlluft, gekühlt oder durch die Zuführung zusätzlicher Wärmeenergie WM, z.B. durch einen zusätzlichen Heißgasstrom, erhitzt werden.

In die Brennkammer 1 und/oder an geeigneter Stelle in dem Resonanzrohr 3 wird an verschiedenen Zuführungspunkten 5.1 bis 5.n eine Rohstoffmischung RM eingeführt. Zusätzlich kann an entsprechenden Zuführungspunkten 5.1 bis 5.n eine Beschichtungsmischung BM in den Heißgasstrom HGS eingeführt werden.

In dem Heißgasstrom HGS erfolgt die Partikelbildung. Durch die Wahl des Zuführungspunktes 5.1 bis 5.n für die Zuführung der Rohstoffmischung RM und gegebenenfalls von mindestens einer Beschichtungsmischung BM, weiteren Prozessgasen PG und/oder Kühl- bzw. Heizmedien KM,WM ist sowohl eine Reaktionstemperatur, die im Verlauf des Heißgasstroms HGS einem bestimmten Profil folgt, als auch die Reihenfolge der Reaktionen zur Partikelbildung und/oder Beschichtung bei aufeinander folgenden Verfahrensschritten in einer Vorrichtung beeinflussbar.

Die Zuführungspunkte 5.1 bis 5.n sind beispielsweise als Düsen ausgebildet. Die im Heißgasstrom HGS gebildeten feinteiligen Partikel P gelangen anschließend in eine Abscheideinrichtung 4, die sich an das Resonanzrohr 3 anschließt. In der Abscheideinrichtung 4 erfolgt die Pulverabscheidung, indem die gebildeten Partikel P vom Heißgasstrom HGS abgetrennt werden.

In einer weiteren vorteilhaften Ausführungsform kann der thermische Reaktor im Bereich der Brennkammer 1 und des ersten Reaktionsraums R1 zumindest und/oder im Bereich des Resonanzrohrs 3 und somit des zweiten Reaktionsraums R2 mit einem Strömungselement versehen sein. Dies unterstützt eine Verwirbelung des pulsierenden Heißgasstroms HGS, wodurch eine bessere Durchmischung der Rohstoffe bzw. Rohstoffmischungen RM ermöglicht ist. In einer besonders einfachen Ausführungsform ragt hierzu das Resonanzrohr 3 zumindest teilweise in die Brennkammer 1 und den ersten Reaktionsraum R1 hinein.

**Figur 2** zeigt ein alternatives Ausführungsbeispiel, bei dem einem ersten thermischen Reaktor mit einem ersten Reaktionsraum R1 ein weiterer thermischer Reaktor als zweiter Reaktionsraum R2 zur Herstellung von feinteiligen Pulvern P nachgeschaltet ist. Der pulsierende Heißgasstrom HGS wird analog der Beschreibung zu Figur 1 in der Brennkammer 1 des ersten thermischen Reaktors mittels des Brenners 2 erzeugt, ohne dass Partikel P hergestellt werden. In diesem ersten Reaktionsraum R1 werden der Heißgasstrom HGS erzeugt und die damit verbundenen Reaktionen ausgeführt.

In diesem Beispiel ist die Brennkammer 1 jedoch nicht keramisch ausgekleidet, sondern wird über die doppelwandige Ausführungsform mit einer Kühlflüssigkeit KF, z.B. Wasser, gekühlt.

An die Brennkammer 1 schließt sich als zweiter Reaktionsraum R2 beispielsweise ein weiterer thermischer Reaktor oder alternativ ein zylindrisches Gefäß mit konischem Einlauf an, wobei die Brennkammer 1 des ersten thermischen Reaktors mit dem Reaktionsraum R2 über ein Rohr 10 verbunden ist. Alternativ kann der Reaktionsraum R2 direkt an die Brennkammer 1 angrenzen. Im Vergleich zu einem Resonanzrohr als Reaktionsraum R2 weist der zylindrische Reaktionsraum ein deutlich größeres Volumen auf. Damit können beispielsweise längere Verweilzeiten realisiert werden.

In einer bevorzugten Ausbildungsform schließt sich an den zweiten Reaktionsraum R2 mindestens ein weiterer Reaktionsraum R3 an, wobei die geometrischen Abmessungen der Reaktionsräume R2, R3 gleich oder unterschiedlich sein können. Vorteil dieser Gestaltung ist beispielsweise, dass definierte unterschiedliche Temperaturzone eingestellt werden können. Dies ist zum Beispiel dann vorteilhaft, wenn zunächst eine Partikelbildung und/oder eine thermische Behandlung der Partikel P bei z.B. hohen Temperaturen ablaufen sollen und anschließend eine Beschichtung bei niedrigeren Temperaturen, z.B. durch organische Komponenten durchgeführt wird. In diesem Fall kann zwischen den Reaktionsräumen R2 und R3 dem Heißgasstrom HGS an einem geeigneten Zuführungspunkt 5.3, 5.6 ein Kühlmedium KM zugeführt werden.

Die Prozessführung kann auch derart gestaltet werden, dass die Prozesstemperatur im ersten Reaktionsraum R1 bezogen auf den Heißgasstrom HGS niedriger ist als in dem folgenden Reaktionsraum R2 und/oder R3. Dazu wird dem pulsierenden Heißgasstrom HGS nach dem ersten Reaktionsraum R1 Wärmeenergie WM, z.B. durch einen Heißgasstromes oder einen zusätzlichen Brenners, zugeführt. Dies kann beispielsweise bei der Verwendung von wässrigen Rohstofflösungen von Vorteil sein, da es so nicht zu einer Krustenbildung bei den eingesprühten Rohstofftröpfchen durch schlagartige Verdampfung an der Tröpfchenoberfläche und der damit verbundenen Aufkonzentration der Inhaltsstoffe an der Tröpfchenoberfläche, kommt.

Über die Zuführungspunkte 5.1 bis 5.2 (Figur 1), 5.3 bis 5.6 (Figur 2) können wahlweise Rohstoffmischung RM, Beschichtungsmischung BM, weitere Prozessgase PG, Kühl- oder Heizmedien KM,WM zugegeben werden. Auch kann, wie in Figur 2 gezeigt, an einem geeigneten Zuführungspunkt 5.5 Kühlwasser KW dem Verbrennungsprozess zugeführt werden.

Die im Heißgasstrom HGS gebildeten feinteiligen Partikel P gelangen anschließend in die Abscheideinrichtung 4, die sich an den beispielsweise als Resonanzrohr 3 ausgebildeten Reaktionsraum R3 anschließt. In der Abscheideinrichtung 4 erfolgt die Pulverabscheidung, indem die gebildeten Partikel P vom Heißgasstrom HGS abgetrennt werden.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

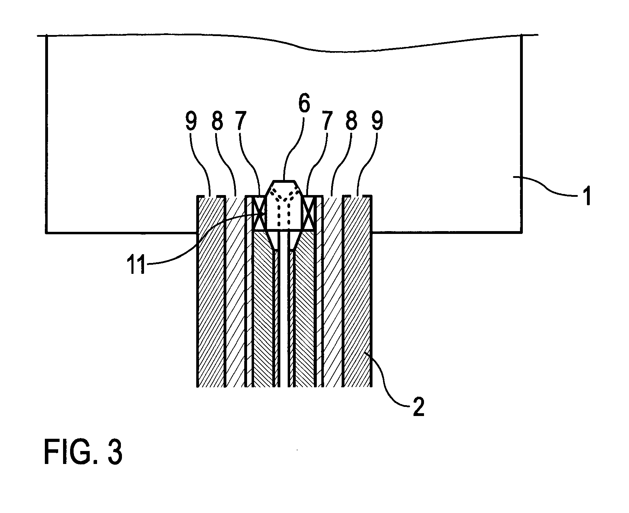

**Figur 3** zeigt schematisch eine bevorzugte Ausführung eines als Drallbrenner ausgebildeten Brenners 2, welcher in eine Brennkammer 1 hineinragt. In der Mitte des Brennkammerbodens tritt eine Brennerlanze 11 in die Brennkammer 1 ein, so dass sich mehrere konzentrische Gas- und Verbrennungsluftströme bilden. Nach außen begrenzt ein Sekundärring die Luftzuführung. Der Sekundärring erzeugt wahlweise eine Mantelströmung um die Drallflamme oder eine vorgemischte Ringflamme. Im Zentrum der Luftzuführung ist die Brennerlanze 11 angeordnet, die drei verschiedene Gasaustritte in die Brennkammer 1 aufweist. Die Konstruktion ermöglicht dabei verschiedene Flammenarten; eine vorgemischte verdrallte Pilotflamme über einen Pilotbrenner 7, eine vorgemischte verdrallte Hauptbrennerflamme über einen Hauptbrenner 8, eine vorgemischte verdrallte Diffusionsbrennerflamme über einen Diffusionsbrenner 6 und ein vorgemischter Ringbrennerflamme über einen Ringbrenner 9.

### Beispiel 1)

Die Rohstoffkomponente Zinkacetat wird in Wasser als Lösungsmittel unter Erwärmen (40°C bis 60°C) gelöst, so dass die resultierende Rohstoffmischung RM in Form einer Rohstofflösung einen Metallgehalt von 10 % Zn aufweist. Diese warme Rohstoffmischung RM wird bei einem Durchsatz von 30 kg/h mit Hilfe einer Schlauchpumpe in den Zuführungspunkt 5.3 (alternativ oder zusätzlich in 5.4) des in Figur 2 gezeigten zweiten Reaktionsraum R2, z.B. einen thermischen Reaktor, über eine 1,8 mm Titandüse in den Heißgasstrom HGS fein eingestäubt und thermisch behandelt. Zwischen der Brennkammer 1 (Ausführungsbeispiel Figur 2 mit erstem Reaktionsraum R2 ohne Partikelbildung) und Reaktionsraum R2 wird Kühlluft KL zugegeben.

### Reaktor-Parameter:

- Temperatur in der Brennkammer 1 : 1000°C
- Schwingungsfrequenz Ausgang Brennkammer 1 : 40 Hz
- Druckamplitude Ausgang Brennkammer 1 : 15 mbar
- Temperatur im Reaktionsraum R2 : 600°C

Vor Eintritt in die Abscheideinrichtung 4 wird der die gebildeten Partikel P enthaltende Heißgasstrom HGS durch Zufuhr von einem Kühlmedium KM, z. B. Kühlluft, am Zuführungspunkt 5.6 auf ca. 160 °C abgekühlt. Als Abscheideinrichtung 4 zum Abtrennen der feinteiligen Partikel P aus dem Heißgasstrom HGS wird ein Kassettenfilter verwendet.

Die ZnO-Partikel P weisen eine Korngröße von d₅₀= 15 nm, eine sphärische Partikelform und eine spezifische Oberfläche (BET) von 60 m²/g, eine champagner Farbe auf. Die C_{ges}-Konzentration des ZnO-Pulvers beträgt 0,6 %, wobei der elementare Kohlenstoff Cₑₗₑ < 0,1 % ist.

Die Partikel P weisen keine Agglomeration aufgrund von Sintererscheinungen (z.B. Sinterhalsbildung) auf und können deshalb in Lösungsmitteln wie beispielsweise Wasser oder organischen Lösungsmittels, eventuell unter Zugabe von Additiven (z.B. Dispergierhilfsmittel) zu einer stabilen agglomeratfreien Suspension dispergiert werden.

Im sichtbaren Spektralbereich des Lichtes zeigen die gebildeten Partikel P aufgrund ihres kleinen Partikeldurchmessers eine hohe Transparenz. Damit eignen sich die hergestellten ZnO Partikel beispielsweise zum Einsatz als UV-Schutz in transparente Lacke und Farben (wie beispielsweise Klarlacke), Plaste, Gummi und Kautschuk. In Gummi und Kautschuk eignet sich die hohe Oberfläche auch als Vulkanisierungshilfe.

### Beispiel 2)

Die Rohstoffkomponente Aluminiumtri-sek-butylat wird mit Isopropylalkohol gemischt, so dass die resultierende Rohstoffmischung RM in Form einer Rohstofflösung einen Metallgehalt von 10 % Al aufweist. Diese Rohstoffmischung RM wird bei einem Durchsatz von 20 kg/h mit Hilfe einer Schlauchpumpe in den Zuführungspunkt 5.4 (alternativ oder zusätzlich in 5.3) des in Figur 2 gezeigten Reaktionsraumes R2 über eine 1,8 mm Titandüse in den Heißgasstrom HGS fein eingestäubt. Durch den kalorischen Energieinhalt brennt die Rohstoffmischung RM unter Freisetzung hoher Wärmeenergie. Über den Zuführungspunkt 5.5 werden 25 kg/h Kühlwasser KW im Gegenstrom zum pulsierenden Heißgas HGS in die Reaktionszone (Verbrennungszone der Rohstoffmischung) eingedüst.

### Reaktor-Parameter:

- Temperatur in der Brennkammer 1 : 800°C
- Schwingungsfrequenz Ausgang Brennkammer 1 : 20 Hz
- Druckamplitude Ausgang Brennkammer 1 : 20 mbar
- Temperatur im Reaktionsraum R2 : 800°C

Vor Eintritt in die Abscheideinrichtung 4 wird der die gebildeten Partikel P enthaltende Heißgasstrom HGS durch Zufuhr von einem Kühlmedium KM, z. B. Kühlluft, am Zuführungspunkt 5.6 auf ca. 160 °C abgekühlt. Als Abscheideinrichtung 4 zum Abtrennen der feinteiligen Partikel P aus dem Heißgasstrom HGS wird ein Kassettenfilter verwendet.

Die Al₂O₃-Partikel P weisen eine Korngröße von d₅₀= 10 nm, eine sphärische Partikelform und eine spezifische Oberfläche (BET) von 180 m²/g, eine weiße Farbe auf. Die C_{ges} - Konzentration des Al₂O₃ -Pulvers beträgt 0,25 %, wobei der elementare Kohlenstoff Cₑₗₑ < 0,1 % ist.

Die Partikel P weisen keine Agglomeration aufgrund von Sintererscheinungen (z.B. Sinterhalsbildung) auf und können deshalb in Lösungsmitteln wie beispielsweise Wasser oder organischen Lösungsmittels, eventuell unter Zugabe von Additiven (z.B. Dispergierhilfsmittel) zu einer stabilen agglomeratfreien Suspension dispergiert werden.

### Beispiel 3)

Im Beispiel 3 wird eine Rohstoffmischung RM aus einer wässrigen Nitratlösung der Elemente Bi, Pb, Sr, Ca und Cu als Gemisch mit einem Gesamtsalzgehalt von 40 % gemäß der Stöchiometrie B_{1,75}Pb_{0,35}Sr_{1,98}Ca_{2,0}Cu₃Oₓ hergestellt. Diese Rohstoffmischung RM wird beispielsweise mit Hilfe einer Schlauchpumpe (z. B. mit einer Aufgabemenge von 2,5 Kg/h) in den Zuführungspunkt 5.1 des in Figur 1 gezeigten Reaktors R1 über eine 1,8 mm Titandüse in den Heißgasstrom HGS fein eingestäubt. Auch kann die Rohstoffmischung RM zusätzlich oder alternativ an einem nachfolgenden Zuführungspunkt 5.2, 5.3 eingebracht werden.

### Reaktor-Parameter:

- Reaktionstemperatur (Zuführpunkt 5.1) : 700°C
- Schwingungsfrequenz Ausgang Brennkammer 1 : 20 Hz
- Druckamplitude Ausgang Brennkammer 1 : 20 mbar

Vor Eintritt in die Abscheideinrichtung 4 wird der die gebildeten Partikel P enthaltende Heißgasstrom HGS durch Zufuhr von einem Kühlmedium KM, z. B. Kühlluft (beispielsweise an einem der Zuführungspunkte 5.2 und/oder 5.3) auf ca. 160 °C abgekühlt. Als Abscheideinrichtung 4 zum Abtrennen der feinteiligen Partikel P aus dem Heißgasstrom HGS wird beispielsweise ein Kassettenfilter verwendet.

Die gebildeten B_{1,75}Pb_{0,35}Sr_{1,98}Ca_{2,0}Cu₃Oₓ-Partikel P weisen eine sehr hohe Homogenität im Bezug auf die stöchiometrische Zusammensetzung und Partikelform auf. Die mittlere Korngröße d₅₀ beträgt 170 nm. Die spezifische Oberfläche (BET) beträgt 9 m²/g. Der Restnitratgehalt beträgt 5 %. Die Partikel P weisen keine Agglomeration aufgrund von Sintererscheinungen (z.B. Sinterhalsbildung) auf.

Das erhaltene Pulver wird anschließend kalziniert, beispielsweise in einem Drehrohrofen oder Kammerofen bei einer Prozesstemperatur von 810 °C, so dass der Nitratgehalt im Pulver auf < 100 ppm abgesenkt wird und sich die gewünschte Phasenzusammensetzung des hergestellten multinären Metalloxidpulver einstellt.

Durch Veränderung der Prozessparameter können die Pulvereigenschaften angepasst werden. Durch Variation der Schwingungsfrequenz und der Druckamplituden kann beispielsweise die mittlere Partikelgröße zwischen 70 nm und 1 µm. Durch die Wahl der Prozesstemperatur wird der Restnitratgehalt (<0,1% - 11%) eingestellt.

### Beispiel 4)

Eine weitere Rohstoffmischung RM wird in einem weiteren Beispiel aus Chloriden der Elemente Y, Ba, Cu als wässrige Lösung gemäß der Stöchiometrie Y_{1,5}Ba₂Cu₃ hergestellt. Diese Rohstoffmischung RM wird mit Hilfe einer Schlauchpumpe (Aufgabemenge = 2 Kg/h) in den Zuführungspunkt 5.1 des in Figur 1 gezeigten Reaktors über eine 1,8 mm Titandüse in den Heißgasstrom HGS fein eingestäubt.

### Reaktor-Parameter:

- Reaktionstemperatur (Zuführpunkt 5.1) : 900°C
- Schwingungsfrequenz Ausgang Brennkammer 1 : 20 Hz
- Druckamplitude Ausgang Brennkammer 1 : 20 mbar

Vor Eintritt in die Abscheideinrichtung 4 wird der die gebildeten Partikel P enthaltende Heißgasstrom HGS durch Zufuhr von einem Kühlmedium KM, z. B. Kühlluft, auf ca. 160 °C abgekühlt. Als Abscheideinrichtung 4 zum Abtrennen der feinteiligen Partikel P aus dem Heißgasstrom HGS wird ein Kassettenfilter verwendet.

Die Partikel P weisen eine sehr hohe Homogenität im Bezug auf die stöchiometrischen Zusammensetzung und Partikelform auf. Die mittlere Korngröße d₅₀ beträgt 60 nm. Die spezifische Oberfläche (BET) beträgt 15 m²/g. Der Restchloridgehalt beträgt 2 %. Die Partikel P weisen keine Agglomeration aufgrund von Sintererscheinungen (z.B. Sinterhalsbildung) auf.

Das erhaltene Pulver wird anschließend kalziniert, beispielsweise in einem Drehrohrofen oder Kammerofen bei einer Prozesstemperatur von 710 °C, so dass der Chloridgehalt im Pulver auf < 50 ppm abgesenkt wird, ohne die Sinteraktivität des Pulvers zu vermindern.

Durch Veränderung der Prozessparameter können die Pulvereigenschaften wie in Beispiel 3 angepasst werden.

### Bezugszeichenliste

- 1: Brennkammer
- 2: Brenner
- 3: Resonanzrohr
- 4: Abscheideinrichtung
- 5: Zuführungspunkte 5.1 bis 5.n
- 6: Diffusionsbrenner
- 7: Pilotbrenner
- 8: Hauptbrenner
- 9: Ringbrenner
- 10: Rohr (Verbindung)
- 11: Brennerlanze

- BM: Beschichtungsmischung
- BS: Brennstoff
- HGS: Heißgasstrom
- KL: Kühlluft
- KM: Kühlmedium
- KW: Kühlwasser
- PG: Prozessgase
- RM: Rohstoffmischung
- R1: erster Reaktionsraum (= erster thermischer Reaktor)
- R2: zweiter Reaktionsraum (= zweiter thermischer Reaktor oder zylindrischer Körper oder Resonanzrohr)
- R3: dritter Reaktionsraum (= Resonanzrohr)
- WM: Heizmedium

## Patentansprüche

1. Verfahren zur Herstellung von feinteiligen Partikeln (P) in einem pulsierenden Heißgasstrom (HGS) in mindestens einem Reaktionsraum (R1 bis R3), bei dem die Partikel (P) durch Zuführung einer Rohstoffmischung (RM) in den pulsierenden Heißgasstrom (HGS) gebildet und in einem der Brennkammer (1) nachgeordneten Filtersystem (Abscheideinrichtung 4) vom Heißgasstrom (HGS) abgetrennt werden,
**dadurch gekennzeichnet, dass** die Rohstoffmischung (RM) in einen derartigen Heißgasstrom (HGS) eingebracht wird, der mit variabel einstellbaren Druckamplituden und Schwingungsfrequenz durch eine Brennerflamme mit periodischer Druckschwingung eines Brenners (2) erzeugt wird, wobei der Ausbreitungsraum und/oder der Turbulenzgrad des Heißgasstroms durch eine Änderung der Position des Brenners (2) in der Brennkammer (1) bzw. mittels eines Strömungselements in der Brennkammer (1) eingestellt wird, und in diesem derart eingestellten Heißgasstrom (HGS) aus der Rohstoffmischung (RM) die Partikel (P) gebildet werden.

2. Verfahren nach Anspruch 1, bei dem die Druckamplitude der Brennerflamme in einem Bereich von 5 mbar bis 50 mbar eingestellt wird.

3. Verfahren nach Anspruch 1 oder 2, bei dem die Schwingungsfrequenz der Brennerflamme in einem Frequenzbereich von 5 Hz bis 150 Hz eingestellt wird.

4. Verfahren nach Anspruch 1, bei dem die Größe mindestens einer der Reaktionsräume (R1 bis R3) eingestellt wird.

5. Verfahren nach Anspruch 4, bei dem der Brenner (2) in mindestens zwei Freiheitsgraden beweglich gelagert ist, wobei durch Schieben und/oder Drehen des Brenners (2) der Reaktionsraum (Rl) hinsichtlich seiner Größe eingestellt wird.

6. Verfahren nach Anspruch 5, bei dem durch Änderung der Position des Brenners (2) der pulsierende Heißgasstrom (HGS) hinsichtlich seiner Resonanzfrequenz eingestellt wird.

7. Verfahren nach einem der vorhergehenden Ansprüche, bei dem die Rohstoffmischung (RM) am Heißgaseinlass und/oder separat an mindestens einem oder mehreren Zuführungspunkten (5.1 bis 5.n), insbesondere in Prozessrichtung an mehreren Zuführungspunkten (5.1 bis 5.n) in die Brennkammer (1) und/oder den Reaktionsraum (R1 bis R3) zugeführt wird.

8. Verfahren nach einem der vorhergehenden Ansprüche, bei dem als Partikel (P) oxidische und/oder hydroxidische Partikel, insbesondere monomodale Oxide der Form MeO oder MeₓO_{y} der I. bis V. Hauptgruppe, wie beispielsweise MgO, CaO, Al₂O₃, SnO₂ SiO₂, oder von Nebengruppen, wie beispielsweise Y₂O₃, TiO₂, Cr₂O₃, MnO, Fe₂O₃, CuO, ZnO, ZrO₂, gebildet werden.

9. Verfahren nach einem der vorhergehenden Ansprüche, bei dem als Partikel (P) Mischoxide, insbesondere der Mineralgruppe Spinell, Mullit, Granate, Silikate, Phosphate, Sulfate, Karbonate oder Hydroxide oder Hydrate, gebildet werden.

10. Verfahren nach einem der vorhergehenden Ansprüche, bei dem Mineralphasen der Gruppen Sulfide, Nitride, Carbide generiert werden und gegebenenfalls Dotierungselemente zugegeben werden und dotierte Minerale erzeugt werden.

11. Verfahren nach einem der vorhergehenden Ansprüche, bei dem die Partikel (P) ein- oder mehrstufig thermisch nachbehandelt werden.

12. Verfahren nach Anspruch 11, bei dem die thermische Nachbehandlung in einem weiteren thermischen Reaktor (= zweiter Reaktionsraum R2) mit pulsierender Verbrennung ausgeführt wird.

13. Verfahren zum Betreiben eines thermischen Reaktors (R1, R2) zur Herstellung von Partikeln (P) nach einem der Ansprüche 1 bis 13 in einem pulsierenden Heißgasstrom (HGS), bei dem die Partikel (P) durch Zuführung einer Rohstoffmischung (RM) in den pulsierenden
Heißgasstrom (HGS), der durch eine Brennerflamme eines Brenners (2) mit periodischer Druckschwingung mit variabel einstellbaren Druckamplituden und Schwingungsfrequenz erzeugt wird, gebildet und in einem der Brennkammer (1) nachgeordneten Filtersystem (Abscheideinrichtung 4) vom Heißgasstrom (HGS) abgetrennt werden.

## Claims

1. A method for making fine particles (P) in a pulsating hot gas flow (HGS) in at least one reaction space (R1 through R3) in which the particles (P) are formed by feeding a raw material mixture (RM) into the pulsating hot gas flow (HGS) and separated from the hot gas flow (HGS) in a filter system (separating means 4) located downstream of the combustion chamber (1), **characterized in that** the raw material mixture (RM) is introduced into such a hot gas flow (HGS), which is generated with variably adjustable pressure amplitudes and vibration frequency by a burner flame with periodic pressure oscillation of a burner (2), while the expansion space and/or the degree of turbulence of the hot gas flow is adjusted by a modification in the position of the burner (2) in the combustion chamber (1) or, correspondingly, by using a fluidic element in the combustion chamber (1), and in the hot gas flow (HGS) thus adjusted, the particles (P) are generated from the raw material mixture (RM).

2. A method as claimed in claim 1, wherein the pressure amplitude of the burner flame is adjusted within a range of between 5 mbars and 50 mbars.

3. A method as claimed in claim 1 or 2, wherein the vibration frequency of the burner flame is adjusted within a frequency range of between 5 Hz and 150 Hz.

4. A method as claimed in claim 1, wherein the size of at least one of the reaction spaces (R1 through R3) is adjusted.

5. A method as claimed in claim 4, wherein the burner (2) is movably mounted in at least two degrees of freedom, while the reaction space (R) is adjusted with regard to its size by sliding and/or rotating the burner (2).

6. A method as claimed in claim 5, wherein the pulsating hot gas flow (HGS) is adjusted with regard to its resonance frequency by a modification in the position of the burner (2).

7. A method as claimed in any preceding claim, wherein the raw material mixture (RM) is fed into the combustion chamber (1) and/or the reaction space (R1 through R3) at the hot-gas inlet and/or separately in at least one or more feeding point(s) (5.1 through 5.n), in particular in process direction at several feeding points (5.1 through 5.n).

8. A method as claimed in any preceding claim, wherein particles (P) formed are oxidic and/or hydroxidic particles, including monomodal oxides in the form of MeO or MeₓO_{y} of main groups I through V including MgO, CaO, Al₂O₃, SnO₂ SiO₂, or of any subgroup including Y₂O₃, TiO₂, Cr₂O₃, MnO, Fe₂O₃, CuO, ZnO, ZrO₂.

9. A method as claimed in any preceding claim, wherein particles (P) formed are mixed oxides including those of the mineral group spinel, mullite, garnets, silicates, phosphates, sulphates, carbonates or hydroxides or hydrates.

10. A method as claimed in any preceding claim, wherein mineral phases of the sulphide, nitride, carbide groups are generated and dating elements are added and doped minerals are generated.

11. A method as claimed in any preceding claim, wherein the particles (P) are aftertreated thermally in a single or multiple stage(s).

12. A method as claimed in claim 11, in which the thermal aftertreatment is performed in one further thermal reactor (= second reaction space R2) with pulsating combustion.

13. A method for operating a thermal reactor (R1, R2) for the generation of particles (P) as claimed in any claim 1 through 13 in one pulsating hot gas flow (HGS), in which the particles (P) are generated by feeding a raw material mixture (RM) into the pulsating hot gas flow (HGS), which is generated by a burner flame of a burner (2) with periodic pressure oscillation with variably adjustable pressure amplitudes and vibration frequency, and separated from the hot gas flow (HGS) in a filter system (separating means 4) located downstream of the combustion chamber (1).

## Revendications

1. Méthode pour fabriquer des particules (P) dans un flux de gaz chaud (HGS) pulsé dans au moins un espace de réaction (R1 à R3), au cours de laquelle les particules (P) sont créées par l'amenée d'un mélange de matières premières (RM) dans le flux de gaz chaud (HGS) pulsé puis séparés du flux de gaz chaud (HGS) par un système de filtration (dispositif séparateur 4) en aval de la chambre de combustion (1), **caractérisée en ce que** le mélange de matières premières (RM) est amené dans un tel flux de gaz chaud (HGS) créé avec des amplitudes de pression et une fréquence d'oscillations variablement réglables par une flamme de brûleur à fluctuation périodique de la pression d'un brûleur (2), dans laquelle l'espace de propagation et/ou le degré de turbulence du flux de gaz chaud est réglé par un changement de la position du brûleur (2) dans la chambre de combustion (1) respectivement au moyen d'un élément d'écoulement à l'intérieur de la chambre de combustion (1) et que les particules (P) sont générées dans ce flux de gaz chaud (HGS) ainsi réglé à partir du mélange de matières premières (RM).

2. Méthode selon la revendication 1, **caractérisée en ce que** l'amplitude de pression de la flamme du brûleur est réglée dans une plage de 5 millibars à 50 millibars.

3. Méthode selon la revendication 1 ou 2, **caractérisée en ce que** la fréquence d'oscillation de la flamme du brûleur est réglée dans une plage des fréquences entre 5 Hz et 150 Hz.

4. Méthode selon la revendication 1, **caractérisée en ce que** la taille d'au moins un espace de réaction (R1 à R3) est réglée.

5. Méthode selon la revendication 4, **caractérisée en ce que** le brûleur (2) est positionné sur un palier mobile à deux degrés de liberté au moins, un déplacement et/ou une rotation du brûleur (2) permettant de régler la taille de l'espace de réaction (R1).

6. Méthode selon la revendication 5, **caractérisée en ce que** le changement de position du brûleur (2) permet de régler le flux de gaz chaud (HGS) pulsé concernant sa fréquence de résonance.

7. Méthode selon une des revendications précédentes, **caractérisée en ce que** le mélange de matières premières (RM) est amené à l'entrée du gaz chaud et/ou de manière distincte sur un ou plusieurs points d'amenée (5.1 à 5.n) dans la chambre de combustion (1) et/ou l'espace de réaction (R1 à R3), et notamment dans le sens du processus sur plusieurs points d'amenée (5.1 bis 5.n).

8. Méthode selon une des revendications précédentes, **caractérisée en ce que** sont créées des particules (P) sous forme d'oxyde et/ou d'hydroxyde, et notamment des oxydes monomodaux sous la forme de MeO ou de MeₓO_{y} des groupes principaux I à V, comme par exemple MgO, CaO, Al₂O₃, SnO₂ SiO₂, ou de sous-groupes, comme p.ex. Y₂O₃, TiO₂, Cr₂O₃, MnO, Fe₂O₃, CuO, ZnO, ZrO₂.

9. Méthode selon une des revendications précédentes, **caractérisée en ce que** les particules (P) formées sont des oxydes mixtes, notamment de la colonne des minéraux, à savoir spinelle, mullite, grenats, silicates, phosphates, sulfates, carbonates ou des hydroxydes ou des hydrates.

10. Méthode selon une des revendications précédentes, **caractérisée en ce que** des phases minérales des groupes sulfures, nitrures, carbures sont générées, que des éléments dateurs sont ajoutés, le cas échéant, et que des minéraux dopés sont réalisés.

11. Méthode selon une des revendications précédentes, **caractérisée en ce que** les particules (P) sont soumis à un retraitement thermique à un ou plusieurs paliers.

12. Méthode selon la revendication 11, **caractérisée en ce que** le retraitement thermique est réalisé dans un autre réacteur thermique (= deuxième espace de réaction R2) avec combustion pulsée.

13. Méthode pour exploiter un réacteur thermique (R1, R2) pour la réalisation de particules (P) selon une des revendications 1 à 13 dans un flux de gaz chaud (HGS) pulsé, dans laquelle les particules (P) sont créées par l'amenée d'un mélange de matières premières (RM) dans le flux de gaz chaud (HGS) pulsé, généré par une flamme de brûleur (2) avec fluctuation périodique de la pression avec des amplitudes de pression et une fréquence d'oscillations variablement réglables puis séparées du flux de gaz chaud (HGS) par un système de filtration (dispositif séparateur 4) en aval de la chambre de combustion (1).
